(19) Europäisches Patentamt
European Patent Office
Office européen des brevets

(11) Numéro de publication : **0 570 247 A1**

(12) **DEMANDE DE BREVET EUROPEEN**

(21) Numéro de dépôt : **93400704.8**

(22) Date de dépôt : **19.03.93**

(51) Int. Cl.$^5$ : **C07F 5/05,** C04B 35/58, C08F 130/06, C08F 138/00

(30) Priorité : **15.05.92 FR 9205915**

(43) Date de publication de la demande : **18.11.93 Bulletin 93/46**

(84) Etats contractants désignés : **DE FR GB**

(71) Demandeur : **RHONE-POULENC CHIMIE**
**25, quai Paul Doumer**
**F-92408 Courbevoie Cédex (FR)**

(72) Inventeur : **Blanchard, Christiane**
**F-24460 Le Breuil et Merleac (FR)**
Inventeur : **Chassagneux, Evelyne**
**Rue des Grés**
**F-69390 Millery (FR)**
Inventeur : **Mignani, Gérard**
**2 Avenue des Frères Lumière**
**F-69008 Lyon (FR)**
Inventeur : **Vaultier, Michel**
**15 Rue des Carrières**
**F-35410 Chateaugiron (FR)**

(74) Mandataire : **Dubruc, Philippe et al**
**RHONE-POULENC CHIMIE Direction de la Propriété Industrielle 25, Quai Paul Doumer**
**F-92408 Courbevoie Cedex (FR)**

(54) **Triethynylborazines, leur préparation et leur utilisation notamment pour la préparation de céramique essentiellement à base de nitrure de bore.**

(57) La présente invention concerne un nouveau composé à base de bore et d'azote de formule (1) :

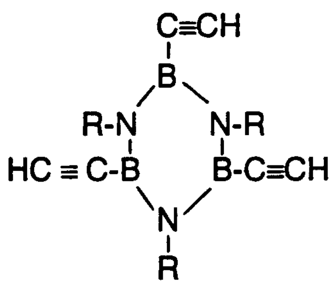

(1)

Elle a trait également au procédé de préparation dudit composé de formule (1).

Elle concerne aussi un procédé de traitement du composé de formule (1) caractérisé en ce que l'on réduit partiellement ou totalement les triples liaisons carbone-carbone en doubles ou éventuellement en simples liaisons carbone-carbone.

Par ailleurs, la présente invention décrit un procédé de préparation de polymères à base de bore et d'azote caractérisé en ce que l'on soumet le composé de formule (1) ou le produit issu de la réduction de celui-ci, à un traitement thermique, en présence ou non d'un catalyseur de type anionique, cationique, radicalaire et/ou à base de métaux de transition.

Enfin, la présente invention décrit un procédé de préparation de céramique à base de nitrure de bore consistant à pyrolyser les polymères obtenus précédemment.

EP 0 570 247 A1

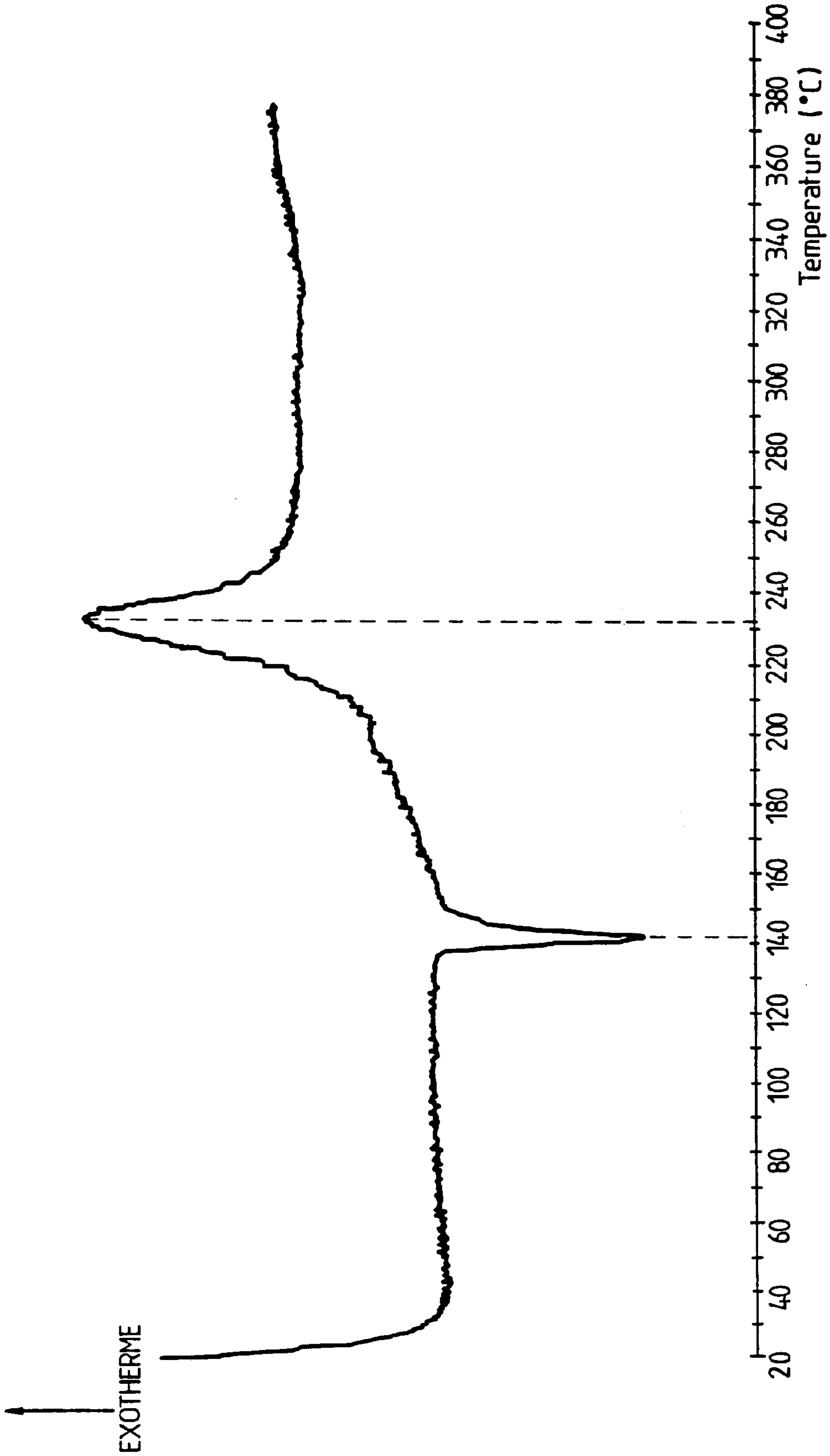
EXOTHERME
20
40
60
80
100
120
140
160
180
200
220
240
260
280
300
320
340
360
380
400
Temperature (°C)

La présente invention a trait à de nouveaux composés à base de bore et d'azote, ainsi qu'à leur procédé de préparation.

Elle concerne de même leur utilisation pour l'obtention de produits dérivés, à base de ces mêmes éléments.

Enfin, la présente invention décrit l'obtention de polymères à base de bore et d'azote à partir des composés selon l'invention et/ou de leurs dérivés, ainsi que l'obtention de céramique à base de nitrure de bore.

On sait que le nitrure de bore est un matériau très recherché, en raison notamment de sa stabilité aux hautes températures, de sa résistance aux chocs thermiques, de sa grande inertie chimique et de sa très bonne conductivité thermique.

On connaît, à l'heure actuelle divers procédés de préparation du nitrure de bore.

L'un d'entre eux consiste par exemple à faire réagir en phase gazeuse un trihalogénoborane avec de l'ammoniac. On obtient de cette façon une poudre de nitrure de bore qu'il est possible de fritter pour obtenir des pièces massives.

Toutefois la microporosité des pièces résultantes peut présenter des inconvénients pour certaines applications.

Plus récemment, on a découvert une nouvelle voie d'accès au nitrure de bore par pyrolyse de polymères organométalliques à base de ces deux éléments.

L'intérêt de cette voie réside surtout dans les possibilités de mise en forme de ce genre de produits, notamment sous forme de revêtement ou de fibres.

On connaît ainsi la préparation de polymères à base de bore et d'azote par aminolyse de composés comprenant du bore, comme par exemple les trihalogénoboranes, les halogénoborazines. Les polymères ainsi obtenus sont pyrolysés pour donner des céramiques comprenant essentiellement du bore et de l'azote.

La présente invention propose une nouvelle voie d'accès à de telles céramiques, mettant en oeuvre des composés de formule (1) :

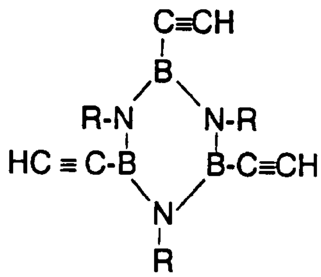

(1)

Ces composés présentent de nombreux avantages.

Tout d'abord, l'obtention de polymères à partir de ces composés ne nécessite pas de travailler à de très hautes températures.

En effet, il a été constaté, d'une façon totalement surprenante, un début de polymérisation desdits composés dès que la température à laquelle ils étaient soumis était supérieure à leur température de fusion.

Ainsi, du fait de leur réactivité importante, l'utilisation de ces composés pour l'obtention de céramique à base de nitrure de bore est particulièrement simplifiée, et ceci quelque soit la mise en forme choisie. Il est à noter cependant que l'intérêt de ces composés est plus important lorsqu'ils sont utilisés sous la forme de revêtements.

Il n'est donc plus nécessaire, pour obtenir une céramique à base de nitrure de bore avec de très bons rendements à la pyrolyse (au moins de 50 à 70%), de passer par une étape intermédiaire de préparation du polymère, comme c'était le cas dans la plupart des procédés connus.

Il suffit en effet de revêtir tout support adéquat puis de traiter thermiquement l'ensemble, en présence ou en absence de catalyseur, de façon à polymériser, et enfin de pyrolyser le polymère obtenu.

Les motifs $>B-C \equiv CH$ constituent d'excellents systèmes réticulants, notamment par voie thermique, radicalaire ou par des métaux de transition.

Par ailleurs, le composé de formule (1) selon l'invention permet d'accéder très facilement et avec de bons rendements à des composés dérivés, dans lesquels au moins l'une des triples liaisons carbone-carbone est réduite en double ou en simple liaison carbone-carbone.

Plus particulièrement le composé de formule (1) permet de produire un composé dans lequel les trois liaisons triples sont réduites en doubles liaisons carbone-carbone. Ainsi, la trivinylborazine peut être obtenue par cette voie et est avantageusement utilisée pour la synthèse d'homopolymères borylés.

Ce dernier type de composés présente aussi l'avantage d'être très réactif et par conséquent de polymériser dans des conditions douces, en présence ou non d'un catalyseur. De plus les rendements à la pyrolyse des

polymères résultants sont du même ordre de grandeur que ceux obtenus par traitement des composés de formule (1).

Un avantage supplémentaire des produits issus de la réduction des composés selon l'invention réside dans le fait qu'ils sont liquides à température ambiante. Il n'est donc pas nécessaire de les solubiliser avant de les utiliser.

La présente invention concerne donc un nouveau composé à base de bore et d'azote de formule (1) :

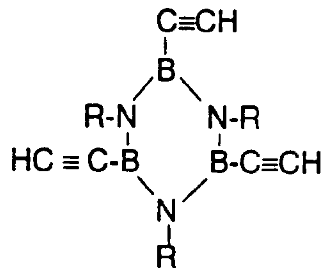

(1) ;

formule dans laquelle les radicaux R, identiques ou différents, représentent chacun un atome d'hydrogène ou un radical alkyle.

La figure 1 correspond à un spectre de l'analyse thermique différentielle d'un composé de formule (1) dans laquelle R représente l'atome d'hydrogéne.

La présente invention concerne de même un procédé de préparation dudit composé consistant à effectuer les étapes suivantes :

- on fait réagir un mono-anion de l'acétylène avec un second composé de formule (2) :

  $(R_2N)_2B\text{-}X$ (2) ;

  formule dans laquelle X représente un halogène et R, identiques ou différents, représentent chacun un radical alkyle, aryle, alkyle-aryle ou aryle-alkyle en $C_1$-$C_{10}$ ;
- on met en contact le produit ainsi obtenu avec un composé présentant au moins un groupement $NH_2$.

La présente invention décrit aussi un procédé de traitement du composé de formule (1) caractérisé en ce que l'on réduit partiellement ou totalement les triples liaisons carbone-carbone en doubles ou éventuellement en simples liaisons carbone-carbone.

Par ailleurs, la présente invention décrit un procédé de préparation de polymères à base de bore et d'azote caractérisé en ce que l'on soumet le composé de formule (1) ou le produit issu de la réduction de celui-ci, à un traitement thermique, en présence ou non d'un catalyseur de type anionique, cationique, radicalaire et/ou à base de métaux de transition.

Enfin, la présente invention décrit un procédé de préparation de céramique à base de nitrure de bore consistant à pyrolyser sous atmosphère réactive, telle que $NH_3$, ou non réactive, telle que l'azote ou l'argon, les polymères obtenus précédemment.

Un premier objet de l'invention consiste donc en un composé de formule (1) donnée auparavant; formule dans laquelle les radicaux R, identiques ou différents, représentent chacun un atome d'hydrogène ou un radical alkyle, éventuellement substitué.

Par radical alkyle, on entend, ici, des radicaux alkyles linéaires, ramifiés ou cycliques.

Plus particulièrement, lesdits radicaux alkyles sont en $C_1$-$C_6$ et éventuellement substitués. A titre d'exemple et sans intention de se limiter, on peut mentionner le méthyle, l'éthyle, le propyle et ses isomères, le butyle et ses isomères, le pentyle et ses isomères, le cyclopentyle, l'hexyle et ses isomères, le cyclohexyle. Les dérivés silylés, halogénés des radicaux cités précédemment conviennent de même à la réalisation de l'invention. De préférence les radicaux R représentent un atome d'hydrogène ou un radical alkyle en $C_1$ - $C_3$ éventuellement substitué.

Ainsi qu'il a été dit plus haut, les composés selon l'invention présentent une très bonne réactivité. Il est donc possible de préparer facilement des composés polymérisés et réticulés sans qu'il soit nécessaire d'utiliser de réactifs supplémentaires.

Par ailleurs, et ceci représente un second objet de l'invention, les composés de formule (1) permettent d'accéder à des produits dans lesquels les triples liaisons carbone-carbone sont réduites, totalement ou partiellement, en doubles et/ou éventuellement en simples liaisons carbone-carbone.

De préférence, les produits obtenus présentent au moins une triple liaison réduite en double liaison carbone-carbone et plus particulièrement les trois triples liaisons réduites en doubles liaisons carbone-carbone.

Tout procédé de réduction de triples liaisons en doubles ou simples liaisons convient à la mise en oeuvre de l'invention.

Toutefois on préfère réaliser la réduction par hydrogénation en présence d'un catalyseur à base de métaux de transition. Plus particulièrement, les métaux choisis appartiennent à la colonne VIII de la classification périodique des éléments.

On pourra, ainsi, mettre en oeuvre l'hydrogénation en présence d'un catalyseur à base de nickel, de platine, de rhodium ou de palladium.

Cette réaction peut être réalisée en présence d'un catalyseur homogène ou hétérogène.

Si la réduction est effectuée en catalyse hétérogène, c'est-à-dire en présence d'un catalyseur non soluble dans le milieu réactionnel, on peut utiliser l'un des métaux cités, à l'état métallique ou encore sous forme d'oxyde. Par ailleurs, le ou les métaux peuvent être supportés ou non. A titre de support susceptible d'être utilisé, on peut mentionner par exemple, le noir de carbone ou le sulfate de baryum.

Dans le cas où la réduction est réalisée en milieu homogène, les catalyseurs généralement utilisés sont choisis parmi des complexes organométalliques à base des métaux précités, solubles dans le milieu réactionnel. A titre d'exemple, on peut citer les catalyseurs de Wilkinson, comme le rhodium chlorotris(triphénylphosphine).

Habituellement, on réalise l'hydrogénation en présence d'un ou plusieurs solvants.

On peut utiliser des solvants choisis parmi les hydrocarbures linéaires ou cycliques, saturés ou aromatiques en $C_5$-$C_{12}$. On peut ainsi mentionner, toujours sans intention de se limiter, le pentane, l'hexane et ses isomères, le cyclohexane, le toluène, le benzène, le xylène et ses isomères.

On peut également utiliser des solvants choisis parmi les esters et plus particulièrement les esters produits de l'estérification de l'acide acétique avec un alcool, linéaire ou cyclique, aliphatique ou aromatique, en $C_1$-$C_{10}$, tels que notamment l'acétate d'éthyle et l'acétate de n-butyle.

L'hydrogénation est de préférence réalisée sous une atmosphère dont la pression ou la pression partielle en hydrogène est contrôlée. Habituellement on procède avec une pression partielle en hydrogène d'environ 1 atmosphère. Bien entendu, il n'est pas exclu d'effectuer cette réaction avec une pression ou une pression partielle en hydrogène plus faible ou plus élevée que celle mentionnée auparavant.

Par ailleurs, le gaz utilisé peut être de l'hydrogène pur ou dilué dans un gaz inerte comme les gaz rares, tels que l'argon ou l'hélium, ou encore dans un gaz comme l'azote.

La température de mise en oeuvre de l'hydrogénation peut varier dans de larges limites. Ainsi, on peut effectuer la réaction à des températures comprises entre 20°C et 400°C. Plus particulièrement, la température est comprise entre la température ambiante et celle du reflux du solvant lorsque l'on effectue la réduction dans un tel milieu.

Le procédé de préparation du composé de formule (1) selon l'invention va maintenant être décrit.

Celui-ci consiste à réaliser les étapes suivantes :

- on fait réagir un mono-anion de l'acétylène, se présentant sous une forme ionique de formule $H\text{-}C \equiv C^- M^+$, avec un second composé de formule (2):

  $$(NR_2)_2B\text{-}X \qquad (2)\ ;$$

  formule dans laquelle X représente un halogène et les radicaux R, identiques ou différents, substitués ou non, représentant chacun l'hydrogène, un radical alkyle, alcényle, alcynyle, aryle, alkyle-aryle ou aryle-alkyle éventuellement substitué en $C_1$-$C_{10}$ ;
- on met en contact le produit ainsi obtenu avec un composé présentant au moins un groupement $NH_2$.

Plus particulièrement le second composé est tel que l'halogène est choisi parmi le chlore et le brome.

Par ailleurs, les radicaux R, identiques ou différents, représentent chacun de préférence l'hydrogène ou un radical alkyle, alcényle, alcynyle, aryle, alkyle-aryle et/ou aryle-alkyle, éventuellement substitué en $C_1$-$C_6$.

Selon un mode plus préféré de l'invention, lesdits radicaux R représentent l'hydrogène ou un radical alkyle éventuellement subtitué en $C_1$-$C_6$.

A titre de substituant possible de ces radicaux, on peut citer tout particulièrement le silicium.

Les composés de formule (2) sont des composés connus de l'homme du métier et peuvent être obtenus par tout moyen connu en soi.

Ainsi, l'article de W. Gerrard et coll. [J. Chem. Soc., (1957), 381] décrit notamment la réaction d'une amine secondaire (ou son anion) avec un halogénoborane, comme le trichloroborane ou le tribromoborane, à une température comprise entre 0 et 25°C. On peut ainsi utiliser, à la place de l'halogénoborane, des complexes du type : $BCl_3$, triéthylamine; $BBr_3$, diméthyl-sulfure (DMS).

Le composé de formule (2) est donc mis en contact avec un mono-anion de l'acétylène se présentant sous une forme ionique de formule $H\text{-}C \equiv C^- M^+$.

De préférence, $M^+$ est choisi parmi les éléments de la colonne I a de la classification périodique des éléments [P. Cadiot et coll., Bulletin de la Société Chimique de France, 12, (1966), 3846] et les magnésiens mixtes de type R-MgX (X représente un atome d'halogéne).

Plus particulièrement M+ est choisi parmi le lithium, le sodium, le potassium et un magnésien mixte.

Ces composés sont obtenus de manière classique. A titre d'exemple de préparation desdits mono-anions, et sans intention de se limiter, on peut mentionner les réactions d'un alkyllithium, comme le butyllithium, de sodium métallique, ou bien encore d'hydrure de sodium, sur l'acétylène.

Ces réactions sont généralement mises en oeuvre en présence d'un solvant aprotique.

Parmi les solvants convenant aux réactions précitées, on peut citer les étheroxydes linéaires ou cycliques, saturés ou non, ou encore des hydrocarbures linéaires ou cycliques, saturés ou non.

Il est à noter que ces solvants doivent être séchés préalablement à leur utilisation.

L'éther, le tétrahydrofurane, le diglyme, l'hexane, le cyclohexane, le toluène, le benzène, le xylène et ses isomères, sont des solvants convenant particulièrement à la préparation des mono-anions de l'acétylène.

Habituellement la préparation de ces composés est réalisée à une température variant de 0°C à la température ambiante.

Par ailleurs, s'il n'est pas obligatoire d'effectuer les réactions précitées sous une atmosphère contrôlée, il est tout de même préférable de procéder sous une atmosphère neutre comme l'azote ou l'argon.

La première étape du procédé selon l'invention, c'est-à-dire la réaction du mono-anion de l'acétylène sur le composé de formule (2) est habituellement réalisée dans un milieu comprenant un solvant.

Les solvants cités dans le cadre de la préparation du mono-anion conviennent aussi à la mise en oeuvre de ladite première étape.

Les conditions de température sont elles aussi comparables à celles énoncées plus haut, c'est-à-dire des températures de l'ordre de 0°C à la température ambiante.

L'ordre d'introduction des réactifs est indifférent. Cependant, on préfère introduire le composé de formule (2) dans le milieu réactionnel comprenant le mono-anion. D'une façon avantageuse, on peut préparer le mono-anion de l'acétylène, puis introduire, dès la fin de la réaction, le composé de formule (2).

La seconde étape du procédé selon l'invention consiste à mettre en contact le produit obtenu lors de la réaction précédente avec un composé présentant au moins un groupement $NH_2$.

Les composés de ce type rentrant dans le cadre de la présente invention peuvent être notamment l'ammoniac, les amines primaires présentant des radicaux saturés ou non, substitués ou non.

Comme exemple d'amines substituées, on peut mentionner les silylamines.

Les diamines conviennent de même à la réalisation de l'invention, comme notamment l'hydrazine, l'hydrazide, les alkylhydrazines, les alkylhydrazides.

On utilise toutefois de préférence l'ammoniac et les amines primaires dans lesquelles le radical, linéaire, ramifié ou cyclique, substitué ou non, est un radical alkyle, alcényle, alcynyle, aryle, alkyle-aryle, aryle-alkyle en $C_1$-$C_{10}$.

Selon un mode plus particulier de réalisation de l'invention, ledit composé est choisi parmi l'ammoniac et les amines primaires dans lesquelles le radical, linéaire, ramifié ou cyclique, substitué ou non, est un radical alkyle, aryle, alkylaryle, arylalkyle en $C_1$-$C_6$.

A titre d'exemple d'amines primaires utilisables dans le procédé selon l'invention, on peut mentionner sans intention de se limiter, la méthylamine, l'éthylamine, la propylamine, isopropylamine, la cyclopropylamine, la butylamine, la pentylamine et leurs isomères, la phénylamine.

On peut de même citer les sylilamines telles que les triorganosylilamines, comme par exemple la triméthylsylilamine, la triéthylsylilamine, ou bien encore les hydrogénooragnosylilamines, comme l'hydrogénodiméthylsylilamine.

Un mode plus préféré de l'invention consiste à utiliser l'ammoniac ou des amines primaires dont le radical est un alkyle en $C_1$-$C_6$.

La seconde étape du procédé selon l'invention peut être effectuée en masse, mais on préfère généralement la réaliser en présence d'un solvant. Dans ce dernier cas, on peut utiliser des composés du type des hydrocarbures saturés ou non, et plus particulièrement les hydrocarbures en $C_5$-$C_{10}$.

Le pentane, l'hexane et leurs isomères, le benzène, le toluène, le xylène et ses isomères peuvent être cités à titre d'exemple de solvants convenant à la mise en oeuvre de l'invention.

La température à laquelle la seconde réaction du procédé de l'invention est effectuée ne présente pas de caractère critique. On procède habituellement à des températures comprises entre la température ambiante et 300°C.

Par ailleurs, on préfère effectuer la réaction sous une atmosphère contrôlée et inerte comme l'azote.

La présente invention concerne enfin la préparation de céramique à base de nitrure de bore.

On procède habituellement en deux étapes.

Dans un premier temps, on réalise la polymérisation du composé (1) et/ou du produit issu de la réduction du composé de formule (1) (appelé par la suite composé réduit). Et dans un second temps, on pyrolyse le polymère ainsi obtenu.

La première étape est habituellement réalisée à des températures comprises entre 50 et 200°C, en présence ou non d'un catalyseur. Ce dernier peut être choisi parmi les catalyseurs de type anionique, cationique, radicalaire et/ou à base de métaux de transition.

A titre de catalyseur de type anionique, on peut citer les composés lithiés comme les alkyllithium, et plus particulièrement le n-butyllithium, et le méthyllithium.

Les acides protoniques ainsi que leurs dérivés tels que les esters, peuvent être utilisés en tant que catalyseurs de type cationique.

On peut donc mentionner, à ce titre, les acides forts tels que l'acide perchlorique, l'acide trifluorométhanesulfonique ainsi que leurs dérivés comme les esters.

Il est de même possible d'effectuer la réaction de polymérisation en présence d'acides de Lewis ou de leurs sels.

Sans intention de se limiter, on peut mentionner, à ce titre, les sels métalliques d'acides carboxyliques, et plus particulièrement des naphténates ou des octoates des éléments des colonnes VIIa, VIII, Ib à IV b de la classification périodique des éléments [P. Cadiot et coll., Bulletin de la Société Chimique de France, (1966), 1981] comme par exemple le fer, le zinc, le manganèse, le plomb, le zirconium.

De même les sels métalliques d'acides inorganiques conviennent à la mise en oeuvre de l'invention, tels que les sulfates, les nitrates ou chlorures de cuivre, d'argent, de fer, de cobalt, de nickel notamment.

Enfin, des catalyseurs de type radicalaire peuvent être utilisés lors de cette réaction ,comme par exemple l'azobis(isobutyro)nitrile.

La quantité de catalyseur nécessaire pour réaliser cette étape est habituellement inférieure à 1,5 % en poids rapporté au poids de composé (1) et/ou de composé réduit.

Selon un mode de réalisation tout à fait avantageux de l'invention, la polymérisation du composé de formule (1) et/ou du composé réduit peut être effectuée sans qu'il soit nécessaire d'utiliser un catalyseur.

En effet, il a été remarqué, d'une façon surprenante, qu'un simple traitement thermique, sans utiliser de catalyseur, effectué à une température supérieure à la température de fusion dudit composé (1) et/ou du composé réduit suffisait à provoquer la polymérisation de celui-ci.

Le polymère obtenu par traitement du composé (1) et/ou du composé réduit, peut éventuellement être isolé puis mis en forme (revêtement, fibre, objet massique).

Après la réaction de polymérisation, on effectue la pyrolyse du polymère issu de la première étape. Cette étape est habituellement réalisée à une température comprise entre 1000°C et 2000°c, et plus particulièrement à une température comprisqe entre 1200°C et 1800°C.

On peut procéder à la pyrolyse sous une atmosphère inerte (ou non réactive), telle que l'azote ou un gaz rare comme l'hélium ou encore l'argon, ou sous une atmosphère réactive comme l'ammoniac.

La céramique ainsi obtenue est essentiellement à base de bore, d'azote et éventuellement de carbone.

Les différentes teneurs en ces éléments, et plus particulièrement celle en carbone, dépendent notamment de l'atmosphère sous laquelle le polymère a été pyrolysé.

Par conséquent, il est possible de réguler le taux de carbone dans la céramique finale en faisant varier l'atmosphère sous laquelle la réaction est effectuée et/ou en faisant varier la nature de R du composé de formule (1).

Selon un mode particulier de l'invention, on effectue la polymérisation et la pyrolyse, sans isoler intermédiairement le polymère obtenu.

Comme cela avait été indiqué auparavant, un tel mode de réalisation est spécialement intéressant dans le cas où l'on veut préparer des revêtements de céramique à base de nitrure de bore sur tout support adéquat.

En effet, selon ce mode particulier, le support précité est recouvert du composé (1) et/ou du composé réduit, utilisés sous forme pure ou diluée dans un solvant. Le revêtement du support est réalisé par tout moyen connu de l'homme du métier, comme l'imprégnation, la pulvérisation, le coulage en bande, au pinceau ou à la goutte.

Le matériau ainsi revêtu est ensuite traité, en une seule étape, en vue de polymériser puis pyrolyser le composé (1) et /ou le composé réduit.

Les conditions de température et d'atmosphères durant le traitement sont comparables à celles données par un traitement avec isolement du polymère.

Des exemples concrets mais non limitatifs de réalisation de la présente invention vont maintenant être présentés.

EXEMPLE 1 : Synthèse de

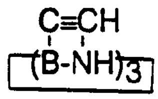

1) Synthèse de $(iPr_2N)_2BCl$

Dans un réacteur de un litre, on pèse 25,27 g (140,94 moles) de complexe $BCl_3$/DMS que l'on dissout dans 500 ml de cyclohexane fraichement distillé. On refroidit à 0°C et on rajoute sous forte agitation 79 ml de diisopropylamine; on laisse réagir 16 h à 25°C. On filtre sous azote le précipité formé ; on rince au cyclohexane sec. Le bis(diisopropylamino)chloroborane est récupéré par distillation ($Eb_{20}$ = 115-120°C). Rendement isolé : 82%.

Spectre de masse :

$M_{théorique}$ = 246,2033 pour $C_{12}H_{28}N_2{}^{10}B^{35}Cl$; $M_{obtenu}$ = 246,2027. RMN $^1H$ (300 MHz), $CDCl_3$ :

1,20 ppm/TMS - doublet (24 H, J = 7 Hz)

3,46 ppm/TMS - heptuplet (4 H, J = 7 Hz)

2) Synthèse de $HC{\equiv}CB(iPr_2N)_2$

Dans un réacteur de un litre sous azote, on introduit 450 ml de THF sec, on refroidit à 0°C et on fait barboter de l'acétylène dans le THF durant 30 mn à 250°C. Tout en poursuivant le barbotage d'acétylène, on transfère lentement 174 ml (278,48 mmol.) d'une solution hexanique de nBuLi (1,6M). On poursuit le barbotage de l'acétylène durant 1h à 0°C.

On rajoute ensuite à cette température 0,75 équivalent molaire de $ClB(NiPr_2)_2$ (51,5 g, 208,81 mmol.). On laisse revenir à 25°C, on évapore le solvant sous vide et on distille sur une colonne vigreux, on obtient 41,42 g d'un composé cristallisé. Rendement isolé : 84%; point de fusion : 40°C. RMN$^1$H (300 Mz), $CDCl_3$ :

1,23 ppm/TMS - doublet (24 H, J = 7 Hz)

2,76 ppm/TMS - singulet (1 H)

3,41 ppm/TMS - heptuplet (4 H, J = 7 Hz)

IR (nujol, NaCl) : 2060 $cm^{-1}$ (-C≡C-); 3290 $cm^{-1}$ (≡C-H)

| Analyse : | | | | |
|---|---|---|---|---|
| $C_{14}H_{29}N_2{}^{10}B$ | calculé : | % C = 71,18 | % H = 12,28 | % N = 11,85 |
| | trouvé : | % C = 71,44 | % H = 11,97 | % N = 11,72 |

3) SYNTHESE DE 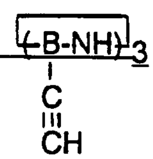

Dans un tricol sous azote, on introduit 6,71 g de $HC{\equiv}CB(iPr_2N)_2$ et 40 ml de toluène sec. On rajoute ensuite de l'ammoniac et on porte le milieu à 105°C pour distiller la diisopropylamine, le débit d'ammoniac est maintenu durant 6h 30 à cette température. On arrête l'ammoniac lorsque l'amine ne distille plus. Le toluène est ensuite éliminé sous vide et le résidu est sublimé sous 0,05 mm d'Hg, à 103°C. On récupère un solide blanc cristallisé avec un rendement de 75,7% et de point de fusion de 142°C (voir l'analyse thermique différentielle : figure 1) .

IR (KBr) : 1484 $cm^{-1}$ (BN); 2075 $cm^{-1}$ (C≡C); 3266 $cm^{-1}$ (≡C-H); 3414 $cm^{-1}$ (NH).

RMN $^1H$ (300 MHz), $CDCl_3$ :

2,60 ppm/TMS - Singulet (1 H, ≡ C-H)

5,54 ppm/TMS - Singulet (3 H, = NH)

RMN$^{13}$C (360 MHz), $CDCl_3$ :

75 ppm (>B-C ≡ C-H)

93,5 ppm (>B-C ≡ C-H)

Spectre de masse : m/e = 153

La céramisation de ce composé à 1000°C sous ammoniac conduit à un solide blanc qui est ensuite pyrolysé à 2000°C sous azote. Les analyses IR et RX montrent la formation de nitrure de bore (BN).

EXEMPLE 2

L'action de 1 équivalent molaire de $(ipr_2N)_2BVi$ en masse à 75°C, en présence d'un large excès d'ammoniac conduit à un solide infusible et soluble dans la diméthylacétanide. Le spectre de chromatographie par perméation de gel de ce composé montre l'existence de nombreux oligomères pouvant comprendre 2 et/ou 3 monomères et plus.

Le spectre IR montre les bandes caractéristiques suivantes : 3430 $cm^{-1}$ (NH), 3050 $cm^{-1}$ (CH), 1616 $cm^{-1}$ (C=C), 1011 $cm^{-1}$ (CH), 949 $cm^{-1}$ ($CH_2$), 1480 $cm^{-1}$ (BN) ("stetches"), 740 $cm^{-1}$ (BN) (déformation), 2875 $cm^{-1}$ ($CH_2$).

La céramisation de cette résine à 1000°C sous azote conduit avec un rendement massique de 62% à un solide noir qui est ensuite pyrolysé à 2000°C sous azote. Le rendement massique de cette pyrolyse est de 92%.

Les analyses RX de ce solide montrent la formation de BN.

La densité est de 1,71.

Les analyses élémentaires correspondent à une composition molaire de type :

$$B\,N_{1,2}C_{0,6}$$

Dans cette céramique, le pourcentage d'oxygène est de 2,3% (massique), celui d'hydrogène de 0,5% (massique).

EXEMPLE 3

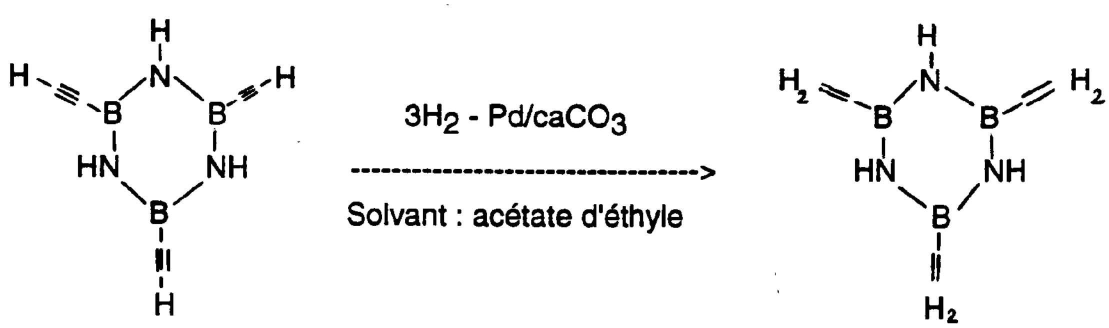


Dans un réacteur de 10 ml , on pèse 152 mg (1 mmole) triéthynylborazine obtenue selon le procédé de l'exemple 1 que l'on dissout dans 2,5 ml d'acétate d'éthyle sec. On ajoute 10 % massique de catalyseur $Pd/CaCO_3$ soit 15 mg et environ 1 mg de poison pour catalyseur de Lindlar [Fluka, réf. 62150, [2,2'-(Ethylenedithio)diethanol]].

On relie le réacteur au système d'hydrogénation (Appareil de PARR) et aprés plusieurs purges successives à l'hydrogène, on commence l'hydrogénation. Lorsque 3 équivalents d'hydrogène (soit 67 ml) ont été absorbés, on stoppe l'hydrogénation.

On filtre la suspension sur cellite, les solvants sont éliminés sous vide pour donner une huile que l'on purifie au Kügelrohr ($Eb_{0,05}$ = 48-50°C). On obtient 135 mg d'un mélange de rapport molaire de 87/13 de trivinylborazine et de triéthylborazine.

Analyse de la trivinylborazine :

RMN$^1$H (300 MHz) $CDCl_3$, δ ppm/TMS :

5,07 (s large, 3H); 5,76 - 5,85 (m, 6H); 5,91 - 6,09 (m, 3H).

RMN$^{13}$C (75,5 MHz) $CDCl_3$, δ ppm/TMS : 130,4 ; 136,2.

Spectre de masse : masse calculée pour $C_6H_{12}{}^{11}B_3N_3$ :

M théorique = 159,1310; M obtenue = 159,1322.

Aprés avoir isolé la trivinylborazine, un certain nombre d'essais de polymérisation de la trivinylborazine a été réalisé. Les résultats sont rassemblés dans le tableau suivant:

| Amorceur | Mode opératoire | Résultats |
|---|---|---|
| Acide Triflique (AF) | 1g de trivinylborazine<br>0,9 % (poids) (AF)<br>3h, 60°C<br>puis 2 h, 20°C | Gel : Infusible, insoluble<br>Analyse IR : Peu de B |
| AIBN | 0,9 g de trivinylborazine<br>2,1 % (poids) AIBN<br>1 h, 55°C | Gel : Infusible, insoluble<br>Analyse IR : Peu de B |
| AIBN | 4,57 g de trivinylborazine<br>0,99 % (poids) AIBN<br>1 h 40 à 50°C | Perte de masse : 2,3 %<br>Infusible, insoluble<br>Analyse IR : Peu de B |
| nBuLi | 1,3 g de trivinylborazine<br>1,17 % (poids) nBuLi<br>1 h 30, 50°C, puis<br>3 h à 120°C | Gel : Infusible, Insoluble<br>Analyse IR : Peu de B |

Ces résultats montrent qu'il est possible d'homopolymériser très facilement la trivinylborazine par voie cationique, radicalire ou anionique.

La pyrolyse sous $NH_3$ ou azote des polymères réticulés obtenus ci-dessus conduit avec des rendements de 50 - 70 % à des céramiques de type BCN. Selon la nature de l'atmosphère de pyrolyse, il est possible de réguler le % de C final.

EXEMPLE 4

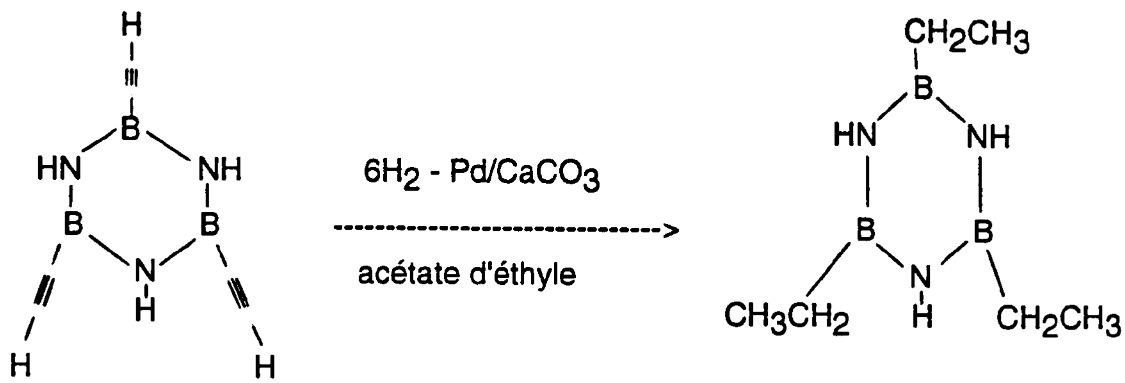


Dans un réacteur de 10 ml, on pèse 181 mg (1,18 mmole) de triéthynylborazine obtenue selon le procédé de l'exemple 1 que l'on dissout dans 2,5 ml d'acétate d'éthyle sec : on ajoute 10 % massique de $Pd/CaCO_3$ (catalyseur de Lindlar). On relie ce réacteur au système d'hydrogénation (appareil de PARR). Aprés plusieurs purges succesives de l'appareillage à l'hydrogène, on commence l'hydrogénation.

Aprés absorbsion de 160 ml d'hydrogène (6 équivalents), on filtre la suspension sur cellite, on évapore les solvants, on obtient une huile limpide.

Aprés purification au kügelrohr ($Eb_{0,05}$ = 60 - 62°C), on obtient 130 mg de triéthylborazine.

RMN $^{1}H$ (300 MHz) $CDCl_3$, $\delta$ ppm/TMS = 0,71 - 0,81 (m, 3H); 0,82-0,96 (m, 9H); 4,66 (s, 3H)

RMN$^{13}C$ (75,5 MHz) $CDCl_3$, $\delta$ ppm/TMS : 8.76; 9.51.

Spectre de masse :

Masse calculée pour $C_6H_{18}{}^{11}B_3N_3$ = M théorique = 165,1779; M obtenue = 165,1790.

## Revendications

**1/** Composé à base de bore et d'azote de formule (1) :

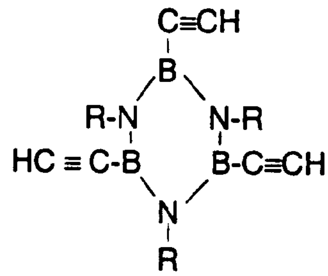

dans laquelle les radicaux R, identiques ou différents représentent un atome d'hydrogène, un radical alkyle, éventuellement substitué.

**2/** Composé selon la revendication précédente, caractérisé en ce que les radicaux R, identiques ou différents, représentent un atome d'hydrogène, un radical alkyle en $C_1$-$C_6$, éventuellement substitué.

**3/** Composé selon l'une des revendications précédentes, caractérisé en ce que les radicaux R, identiques ou différents, représentent un atome d'hydrogène, un radical alkyle en $C_1$-$C_3$, éventuellement substitué.

**4/** Procédé de préparation du composé selon l'une des revendications précédentes, caractérisé en ce que l'on effectue les étapes suivantes :

- on fait réagir un mono-anion de l'acétylène, se présentant sous une forme ionique de formule $H\text{-}C \equiv C^- M^+$, avec un second composé de formule (2) :

  $(R_2N)_2B\text{-}X$ (2) ;

  formule dans laquelle : X représente un halogène, les radicaux R, identiques ou différents, représentent chacun l'hydrogène, un radical alkyle, aryle, alcényle, alcynyle, alkyle-aryle ou aryle-alkyle, éventuellement substitué en C1-$C_{10}$;
- on met en contact le produit obtenu en première étape avec un composé azoté présentant au moins un groupement $NH_2$.

**5/** Procédé selon la revendication précédente, caractérisé en ce que l'on utilise un composé de formule (2) dans laquelle X représente le chlore ou le brome.

**6/** Procédé selon l'une des revendications 4 ou 5, caractérisé en ce que l'on utilise un composé de formule (2) dans laquelle les radicaux R, identiques ou différents, représentent l'hydrogène ou un radical alkyle, alcényle, alcynyle, aryle, alkyle-aryle, aryle-alkyle en $C_1$-$C_6$ et de préférence un radical alkyle en $C_1$-$C_6$.

**7/** Procédé selon l'une quelconque des revendications de 4 à 6, caractérisé en ce que $M^+$ est choisi parmi les éléments de la colonne la de la classification périodique des éléments, et les magnésiens mixtes.

**8/** Procédé selon l'une quelconque des revendications de 4 à 7, caractérisé en ce que le composé azoté est plus particulièrement choisi parmi l'ammoniac et les amines primaires dans lesquelles le radical est un radical alkyle, alcényle, alcynyle, aryle, alkyle-aryle ou aryle-alkyle en $C_1$-$C_{10}$.

**9/** Procédé selon la revendication précédente, caractérisé en ce que le composé azoté est choisi parmi l'ammoniac et les amines primaires dont le radical est un alkyle, alcényle, alcynyle, aryle, alkyle-aryle, aryle-alkyle, éventuellement substitué en $C_1$-$C_6$, et de préférence un radical alkyle éventuellement substitué en $C_1$-$C_6$.

**10/** Procédé de traitement d'un composé selon l'une des revendications 1 à 3 ou d'un produit notamment obtenu par le procédé de l'une des revendications 4 à 9, caractérisé en ce que l'on réduit tout ou partie des triples liaisons carbonecarbone en doubles et/ou éventuellement en simples liaisons carbone-carbone.

**11/** Procédé selon la revendication précédente, caractérisé en ce que l'on réduit au moins l'une des trois liaisons triples en doubles laisons carbone-carbone.

**12/** Procédé selon l'une des revendications 10 ou 11, caractérisé en ce que l'on effectue la réduction par une hydrogénation en présence d'un catalyseur homogène ou hétérogène, à base d'un métal choisi parmi la colonne VIII de la classification périodique des éléments.

**13/** Procédé de traitement d'un composé selon l'une des revendications 1 à 3 ou d'un produit notamment obtenu par le procédé de l'une des revendications 4 à 9, caractérisé en ce que l'on polymérise ledit composé par chauffage de celui-ci, éventuellement en présence d'un catalyseur de type anionique, cationique, radicalaire et/ou à base de métaux de transition.

**14/** Procédé de traitement d'un produit obtenu selon l'une des revendications 10 à 12, caractérisé en ce que l'on polymérise ledit produit par chauffage de celui-ci, éventuellement en présence d'un catalyseur de type

anionique, cationique, radicalaire et/ou à base de métaux de transition.

**15/** Procédé selon l'une des revendications 13 ou 14, caractérisé en ce que le catalyseur précité est choisi parmi l'azobis(isobutyro)nitrile, l'acide trifluoroacétique, l'acide perchlorique, les composés organolithiés comme les alkyllithium.

**16/** Procédé de préparation d'une céramique à base de bore et d'azote caractérisé en ce que l'on effectue la pyrolyse d'au moins un composé obtenu selon l'une des revendications 13 à 15 sous une atmosphère réactive ou non.

**17 -** Procédé de préparation d'une céramique à base de nitrure de bore, caractérisé en ce que l'on traite thermiquement un composé selon l'une des revendications 1 à 3 et/ou un composé obtenu par le procédé de l'une des revendications 10 à 12 sous une atmosphère réactive ou non.

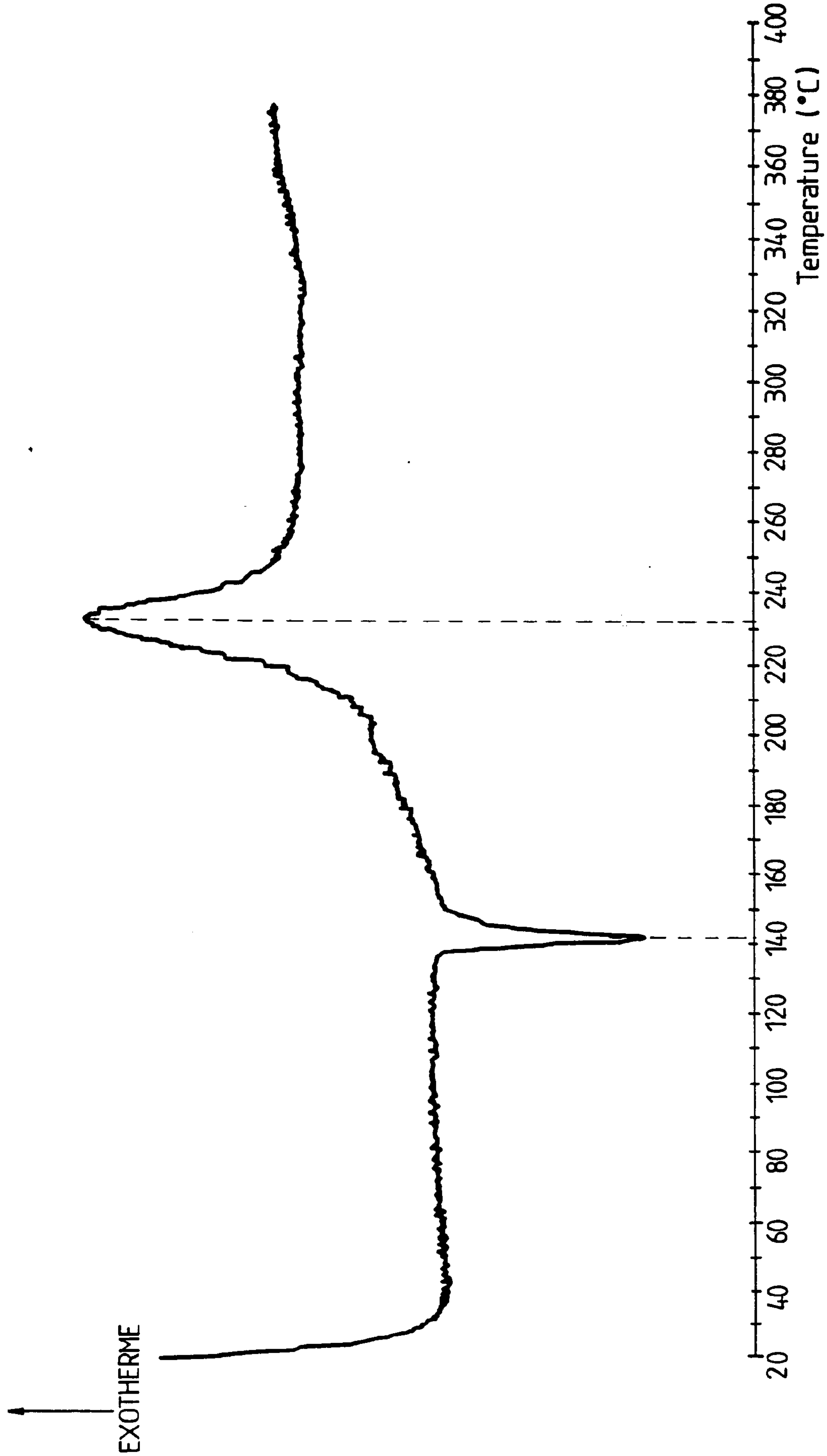
EXOTHERME
Temperature (°C)
20
40
60
80
100
120
140
160
180
200
220
240
260
280
300
320
340
360
380
400

Office européen des brevets

# RAPPORT DE RECHERCHE EUROPEENNE

Numero de la demande

EP 93 40 0704

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | CHEMICAL ABSTRACTS, vol. 66, 1967, Columbus, Ohio, US; abstract no. 46478c, NAKAGAWA, T. ET AL. page 4415 ; * abrégé * & JP-A-41 021 778 (SHIONOGI & CO., LTD.) | 1-3 | C07F5/05<br>C04B35/58<br>C08F130/06<br>C08F138/00 |
| A | EP-A-0 307 260 (RHONE-POULENC CHIMIE) * le document en entier * | 1-17 | |
| A | CHEMICAL REVIEWS vol. 90, no. 1, 1990, pages 73 - 91 PAINE, R.T. ET AL. * page 81 - page 88 * | 1-17 | |

DOMAINES TECHNIQUES RECHERCHES (Int. Cl.5 )

C07F
C04B
C08F

Le présent rapport a été établi pour toutes les revendications

| Lieu de la recherche | Date d'achèvement de la recherche | Examinateur |
|---|---|---|
| LA HAYE | 07 MAI 1993 | RINKEL L.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)